# EUROPÄISCHE PATENTSCHRIFT

(11) **EP 1 137 467 B1**
(45) Veröffentlichungstag und Bekanntmachung des Hinweises auf die Patenterteilung: **12.02.2003**
(21) Anmeldenummer: 99950387.3
(22) Anmeldetag: 03.11.1999
(51) Int. Cl.: B01D 21/24, C02F 3/12, B01D 17/02, E02B 15/04

(54) **VORRICHTUNG ZUM ABZUG VON KLARWASSER AUS KLÄRANLAGEN MIT DISKONTINUIERLICHEM BETRIEB**
DEVICE FOR WITHDRAWING CLARIFIED WATER FROM CLARIFICATION PLANTS WITH A DISCONTINUOUS OPERATION
DISPOSITIF D'EXTRACTION D'EAU CLAIRE A PARTIR D'INSTALLATIONS A DECANTATION A FONCTIONNEMENT DISCONTINU

(30) Priorität: 05.11.1998 AT 71898
(43) Veröffentlichungstag der Anmeldung: 04.10.2001
(73) Patentinhaber: Gassner, Kurt, 2011 Sierndorf (AT)
(72) Erfinder: Gassner, Kurt, 2011 Sierndorf (AT)
(74) Vertreter: Babeluk, Michael, Dipl.-Ing. Mag.
(86) Internationale Anmeldenummer: AT9900262
(87) Internationale Veröffentlichungsnummer: WO00027498

(56) Entgegenhaltungen:
- US-A- 3 838 812
- US-A- 4 695 376
- US-A- 4 963 252
- PATENT ABSTRACTS OF JAPAN vol. 1998, no. 11, 30. September 1998 (1998-09-30) & JP 10 156386 A (MATSUSHITA ELECTRIC WORKS LTD), 16. Juni 1998 (1998-06-16)

## Beschreibung

Die vorliegende Erfindung betrifft eine Vorrichtung zum Abzug von Klarwasser aus Kläranlagen mit diskontinuierlichem Betrieb, mit einem Schwimmkörper, einem Abzugsschlauch und mit mindestens einer verschließbaren Abzugsöffnung gemäß dem Oberbegriff des Anspruches 1.

Kläranlagen mit diskontinuierlichem Betrieb, die nach dem sogenannten SBR-Verfahren (Single Batch Reactor) arbeiten, sind für eine Vielzahl von Anwendungsgebieten hervorragend geeignet. Eine solche Kläranlage ist beispielsweise in der österreichischen Gebrauchsmusterschrift Nr. 2.078 des Anmelders der vorliegenden Anmeldung beschrieben. Das SBR-System ist dadurch gekennzeichnet, daß das zu reinigende Abwasser nicht kontinuierlich zugeführt wird, sondern zu Beginn eines Behandlungszyklus auf einmal zugegeben wird. Danach werden die Behandlungsschritte durchgeführt, die beispielsweise eine Belüftung durch Einblasen von Luft umfassen. Am Ende eines Behandlungszyklus ist allgemein eine Absetzphase vorgesehen, nach der sich im oberen Bereich des Reaktors eine Klarwasserschicht ausbildet. Mit dem Abpumpen dieser Klarwasserschicht ist ein Behandlungszyklus vollendet und es kann neuerlich Abwasser zugeführt werden. Am vorteilhaftesten erfolgt das Abpumpen des Klarwassers über einen Schwimmkörper, weil dadurch gewährleistet wird, daß stets unmittelbar unterhalb der Wasseroberfläche abgezogen werden kann. Auf diese Weise wird einerseits vermieden Schwimmschlamm zusammen mit dem Klarwasser abzuziehen, und andererseits kann Klarwasser mit dem jeweilig höchsten Reinigungsgrad abgezogen werden.

Aus der US 4 695 376 , auf der der Oberbegriff des Anspruchs 1 basiert ist eine Dekantiervorrichtung bekannt, die mit einem Schwimmer ausgestattet ist. Um ein Eindringen von Fremdkörpern in die Abzugsleitung zu verhindern ist bei dieser bekannten Vorrichtung ein Ventil zum Verschließen der Abzugsöffnung vorgesehen. Dieses Ventil wird über eine elektrisch betätigbare Stelleinrichtung geöffnet und geschlossen. Auf diese Weise kann während des Einblasens von Luft in den Reaktor verhindert werden, daß die zu diesem Zeitpunkt vorliegenden Turbulenzen Biomasse und andere Verunreinigungen in das Klarwasserabzugssystem eintragen. Die elektrische Betätigung der Abzugsöffnung ist jedoch relativ aufwendig. Insbesonders bei kleineren Kläranlagen sind die damit verbundenen Kosten vergleichsweise hoch.

Aus der US-A-4 963 252 ist ein sogenannter Dekanter bekannt, bei dem ein perforiertes Rohr innen einen Schlauch aufweist, der durch eine Druckluftquelle aufgeblasen werden kann. Bei aufgeblasenem Schlauch verschließen sich die Abzugsöffnungen, so daß die Abzugsmenge gesteuert werden kann. Eine solche Lösung ist jedoch anfällig für Verschmutzungen, und durch die Lebensdauer des Schlauches ist die Einfahrtszeit begrenzt.

Aufgabe der vorliegenden Erfindung ist es, die oben beschriebene Vorrichtung so weiterzubilden, daß eine einfacher und zuverlässiger betrieb der Abzugsvorrichtung möglich ist.

Erfindungsgemäß sind Merkmale des kennzeichnenden Teils von Anspruch 1 vorgesehen.

Es hat sich herausgestellt, daß durch die Verwendung von Druckluft ein besonders einfacher Aufbau sowohl der Abzugsvorrichtung als auch der Kläranlage insgesamt erreicht werden kann. Diese Vorteile kommen um so stärker zum Tragen, je kleiner die Anlagengröße ist. Besonders günstig bei der vorliegenden Erfindung ist, daß es nicht erforderlich ist, irgendwelche elektrischen Leitungen ins Innere des Reaktors zu verlegen. Damit wird auch die Betriebssicherheit gesteigert.

In einer besonders bevorzugten Ausführungsvariante der Erfindung ist vorgesehen, daß das Stellorgan dazu ausgebildet ist, unter Druckluftbeaufschlagung ein Öffnen der Abzugsöffnung zu bewirken und daß Federn zum Schließen der Abzugsöffnung vorgesehen sind. Der Vorteil dieser Lösung besteht darin, daß die Schließkraft durch die Federkraft der Federn klar definiert ist und daß die Druckluftbeaufschlagung des Stellorgans nur während der relativ kurzen Abzugsphase erfolgen muß.

Weiters betrifft die vorliegende Erfindung eine Kläranlage mit einem SBR-Reaktor, der mit einer Vorrichtung, wie sie oben beschrieben ist, ausgestattet ist. Besonders bevorzugt ist es, wenn außerhalb des SBR-Reaktors eine Pumpe zum Abzug von Klarwasser angeordnet ist, die mit dem Abzugsschlauch in Verbindung steht.

Eine besonders leichte Montage und Demontage der erfindungsgemäßen Vorrichtung wird dadurch erreicht, daß die Vorrichtung zum Abzug von Klarwasser an Führungsstangen in vertikaler Richtung geführt ist, die von Haltestangen gehalten sind, wobei Führungsstangen und Haltestangen durch einen Verbindungsteil unterhalb der Vorrichtung verbunden sind. Um einen sicheren Betrieb zu gewährleisten, ist es vorteilhaft, wenn die Vorrichtung in vertikaler Richtung gleitbar an Führungsstangen geführt wird. Falls diese Führungsstangen vom Deckel des Reaktors her abgehängt werden, ergibt sich das Problem eines schwierigen Aus- und Einbaus. Aufgrund der Tatsache, daß bei der bevorzugten Lösung die Führungsstangen von unten her gehalten werden, kann durch das Abnehmen eines entsprechenden Deckels erreicht werden, daß die oberen Enden der Führungsstangen frei stehen. Damit ist ein Ausbau der Schwimmer-Vorrichtung leicht möglich.

In der Folge wird die Erfindung anhand des in den Figuren dargestellten Ausführungsbeispiels näher erläutert.

Es zeigen:
- Fig. 1: eine erfindungsgemäße Vorrichtung mit geschlossener Abzugsöffnung,
- Fig. 2: die Vorrichtung von Fig. 1 mit geöffneter Abzugsöffnung;
- Fig. 3 und 4 bis 5: einen SBR-Reaktor einer erfindungsgemäßen Kläranlage, wobei die Fig. 3 Schnitte nach den Linien III-III bzw. IV-IV der Fig. 5 sind.

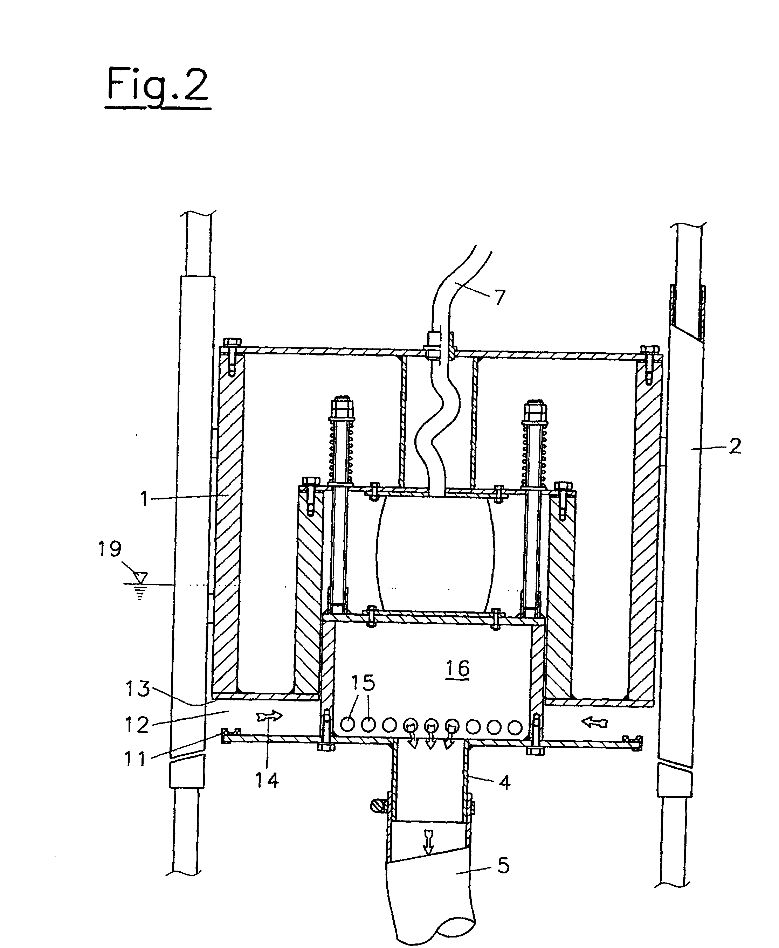

Die erfindungsgcmäßc Vorrichtung besteht aus einem Schwimmkörper 1, der an teilweise dargestellten Führungsstangen 2 in vertikaler Richtung beweglich geführt ist. In dem Schwimmkörper 1 ist ein Anschlußkörper 3 beweglich gelagert, der einen Anschlußstutzen 4 für einen Abzugsschlauch 5 aufweist. Ein Stellorgan zur Betätigung des Anschlußkörpers 3 ist als Balg 6 ausgeführt, der über einen Schlauch 7 mit Druckluft beaufschlagbar ist. Der Balg 6 stützt sich an seiner Oberseite an einer Anschlagfläche 8 ab, die fest mit dem Schwimmkörper 1 verbunden ist. An seiner Unterseite drückt der Balg 6 auf eine Betätigungsfläche 9, um bei Beaufschlagung mit Druckluft den Anschlußkörper 3 nach unten zu drücken. Im unteren Bereich besitzt der Anschlußkörper 3 eine Platte 10, die mit einer umlaufenden Dichtung 11 versehen ist. In geschlossenem Zustand liegt die Dichtung 11 an dem Schwimmkörper 1 dichtend an, um so die Abzugsöffnung zu schließen. Aus der Fig. 2 ist ersichtlich, daß die Abzugsöffnung 12 als ringförmiger Spalt zwischen der Dichtung 11 und einer unteren Platte 13 des Schwimmkörpers 1 gebildet ist. Das Klarwasser kann in dem geöffneten Zustand entlang der Pfeile 14 durch die Abzugsöffnung 12 einströmen und gelangt über weitere Öffnungen 15 in einen Raum 16 im Inneren des Anschlußkörpers 3 und von dort direkt in den Anschlußstutzen 4 und weiter in den Abzugsschlauch 5.

Indem der Schwimmkörper 1 teilweise mit einer vorbestimmten Menge Wassers gefüllt wird, kann die Eintauchtiefe verändert werden. Auf diese Weise kann das Abzugsniveau in Abhängigkeit von Betriebsbedingungen der Kläranlage genau auf einen optimalen Wert eingestellt werden. Weiters kann das Öffnen und Schließen der Abzugsöffnung 12 durch nicht dargestellte Grenzschalter in den Führungsgestängen erfolgen.

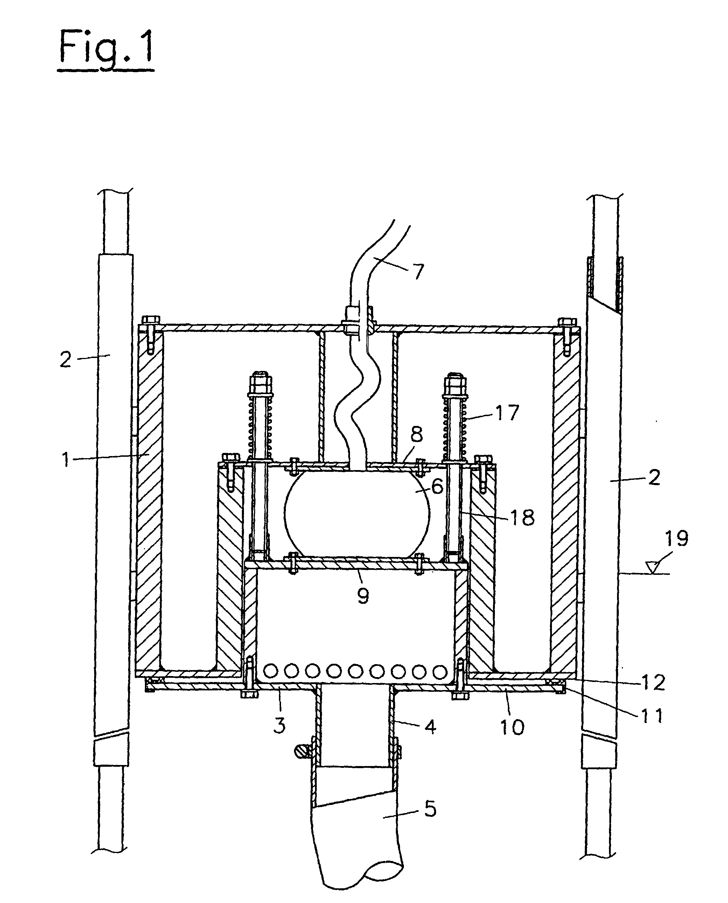

Federn 17 sind dazu ausgebildet, über Zugstangen 18 den Anschlußkörper 3 nach oben hin vorzuspannen. Bei drucklosem Balg 6 wird daher die in der Fig. 1 dargestellte geschlossene Stellung eingenommen.

Die Wasseroberfläche ist mit 19 gekennzeichnet. Es ist daraus ersichtlich, daß sich die Einströmöffnung 12 unmittelbar unterhalb der Wasseroberfläche 19 befindet, wobei der Abstand mit einigen Zentimetern so gewählt ist, daß das Absaugen von Schwimmschlamm zuverlässig vermieden werden kann.

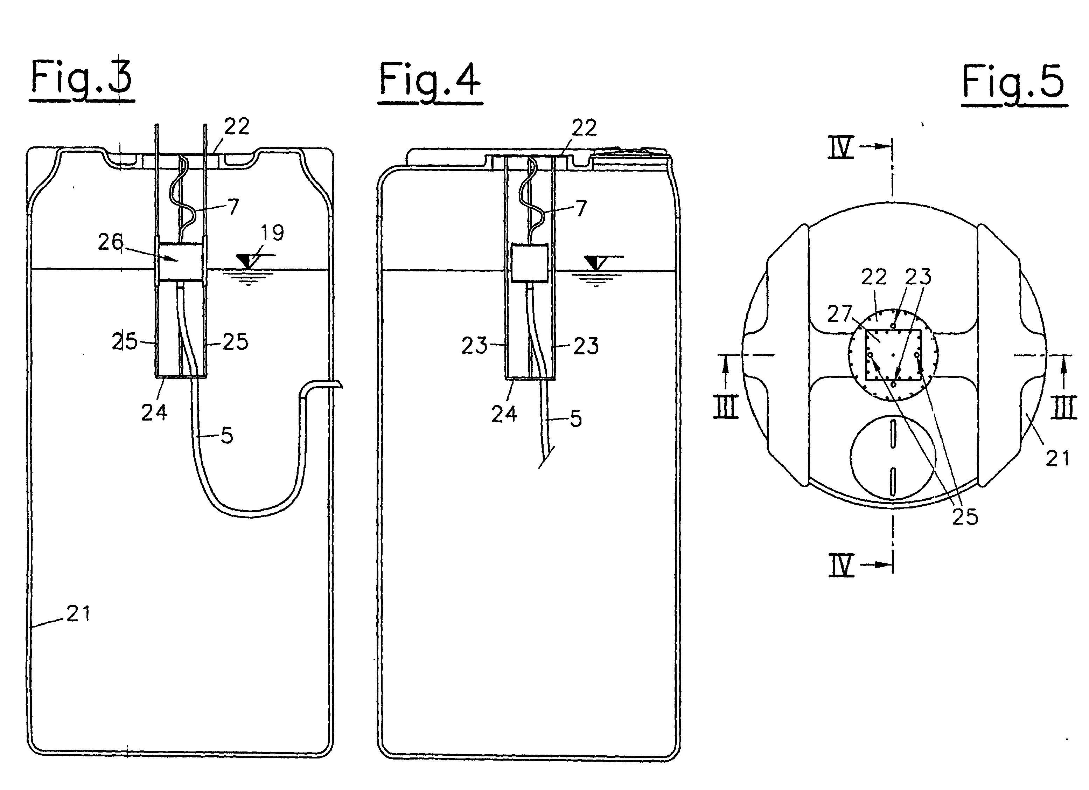

Die Fig. 3 bis 5 zeigen einen Reaktor 21, wobei die Oberfläche des Reaktorinhalts mit 19 bezeichnet ist. Von einem Deckel 22 sind zwei Haltestangen 23 abgehängt, die an ihrem unteren Ende einen Verbindungsteil 24 tragen. Von dem Verbindungsteil 24 ragen zwei Führungsstangen 25 frei nach oben, an denen eine schematisch mit 26 dargestellte erfindungsgemäße Vorrichtung zum Abzug von Klarwasser in vertikaler Richtung gleitbar gelagert ist. Die Führungsstangen 25 sind lose in einem weiteren Deckel 27 geführt, der in dem ersten Deckel 22 gelagert ist. Nach Öffnen des Deckels 27 stehen die Führungsstangen 25 frei nach oben und die Vorrichtung 26 kann leicht nach oben aus dem Reaktor 21 herausgezogen werden. Auf diese Weise können Wartungsarbeiten leicht und unproblematisch ausgeführt werden.

## Patentansprüche

1. Vorrichtung zum Abzug von Klarwasser aus Kläranlagen mit diskontinuierlichem Betrieb, mit einem Schwimmkörper (1), einem Abzugsschlauch (5) und mit mindestens einer verschließbaren Abzugsöffnung, wobei ein Stellorgan zum Öffnen bzw. Schließen der Abzugsöffnung (12) vorgesehen ist, wobei eine fest mit dem Schwimmkörper (1) verbundene Anschlagfläche (8) und eine relativ zum Schwimmkörper (1) bewegliche Betätigungsfläche (9) vorgesehen sind, und wobei mit der beweglichen Betätigungsfläche (9) eine Platte (10) verbunden ist, um die Abzugsöffnung (12) in der Form eines ringförmigen Spalts zwischen der Platte (10) und einer unteren Platte (13) des Schwimmkörpers (1) zu öffnen bzw. zu schließen, **dadurch gekennzeichnet, dass** das Stellorgan als mit Druckluft betätigbarer Balg (6) ausgebildet ist, der zwischen der fest mit dem Schwimmkörper (1) verbundenen Anschlagfläche (8) und der relativ zum Schwimmkörper (1) beweglichen Betätigungsfläche (9) angeordnet ist.

2. Vorrichtung nach Anspruch 1, **dadurch gekennzeichnet, dass** das Stellorgan dazu ausgebildet ist, unter Druckluftbeaufschlagung ein Öffnen der Abzugsöffnung zu bewirken und dass Federn (17) zum Schließen der Abzugsöffnung (12) vorgesehen sind.

3. Vorrichtung nach einem der Ansprüche 1 oder 2, **dadurch gekennzeichnet, dass** der Schwimmkörper (1) mit Wasser befüllbar ist, um durch eine Veränderung der Eintauchtiefe das Abzugsniveau einzustellen.

4. Kläranlage mit einem SBR-Reaktor, **dadurch gekennzeichnet, dass** eine Vorrichtung nach einem der Ansprüche 1 oder 3 vorgesehen ist.

5. Kläranlage nach Anspruch 4, **dadurch gekennzeichnet, dass** außerhalb des SBR-Reaktors eine Pumpe zum Abzug von Klarwasser angeordnet ist, die mit dem Abzugsschlauch (5) in Verbindung steht.

6. Kläranlage nach einem der Ansprüche 4 oder 5, **dadurch gekennzeichnet, dass** die Vorrichtung (26) zum Abzug von Klarwasser an Führungsstangen (25) in vertikaler Richtung geführt ist, die von Haltestangen (23) gehalten sind, wobei Führungsstangen (25) und Haltestangen (23) durch einen Verbindungsteil (24) unterhalb der Vorrichtung (26) verbunden sind.

7. Kläranlage nach Anspruch 6 mit einem Deckel (22), **dadurch gekennzeichnet, dass** die Haltestangen (23) an dem Deckel (22) befestigt sind, und dass die Führungsstangen (25) von einem weiteren Deckel (27) der Kläranlage quer zu ihrer Achse gehalten werden, der innerhalb des ersten Deckels (22) angeordnet ist.

## Claims

1. A device for discharging clarified water from sewage plants operated in a batch mode, with a float (1), a discharge tube (5) and with at least one closable discharge port, a control unit being provided for opening or closing the discharge port (12), a stop face (8) firmly connected to the float (1) and an actuating face (9) movable relative to said float (1) being provided and a plate (10) being connected to the movable actuating face (9) in order to open or close said discharge port (12) which is in the form of an annular slot provided between said plate (10) and a lower plate (13) of the float (1), **characterized in that** the control unit is configured to form a compressed air actuatable bellows (6) which is arranged between the stop face (8) firmly connected to the float (1) and the actuating face (9) movable relative to said float (1).

2. The device according to claim 1, **characterized in that** the control unit is configured to cause the discharge port to open under the action of the compressed air applied to it and that springs (17) are provided for closing the discharge port (12).

3. The device according to one of the claims 1 or 2, **characterized in that** the float (1) is fillable with water in order to adjust the discharge level by varying the immersion depth.

4. A sewage plant with an SBR reactor, **characterized in that** there is provided a device according to one of the claims 1 or 3.

5. The sewage plant according to claim 4, **characterized in that** a pump for discharging clarified water is arranged outside of the SBR reactor, said pump being in communication with the discharge tube (5).

6. The sewage plant according to one of the claims 4 or 5, **characterized in that** the device (26) for discharging clarified water is guided in the vertical direction along guide bars (25) which are retained by retaining bars (23), guide bars (25) and retaining bars (23) being connected underneath the device (26) by way of a connecting member (24).

7. The sewage plant according to claim 6 with a cover (22), **characterized in that** the retaining bars (23) are attached to the cover (22) and that the guide bars (25) are retained across their axis by another cover (27) of the sewage plant, which is arranged within said first cover (22).

## Revendications

1. Dispositif pour l'écoulement d'eau claire d'installations de clarification des eaux à fonctionnement discontinu, comprenant un flotteur (1), un tuyau d'écoulement (5) et au moins une ouverture d'écoulement pouvant être fermée, dans lequel un actionneur est prévu pour ouvrir ou fermer l'ouverture d'écoulement (12), avec une surface de butée (8) reliée rigidement au flotteur (1) et une surface d'actionnement (9) mobile par rapport au flotteur (1), et avec une plaque (10) reliée à la surface d'actionnement mobile (9) pour ouvrir ou fermer l'ouverture d'écoulement (12) constituée par une fente annulaire existant entre la plaque (10) et une plaque inférieure (13) du flotteur (1),
**caractérisé en ce que**
l'actionneur est constitué par un soufflet (6) pouvant être actionné à l'air comprimé et qui est disposé entre la surface de butée (8) reliée rigidement au flotteur (1) et la surface d'actionnement (9) mobile par rapport au flotteur (1).

2. Dispositif selon la revendication 1,
**caractérisé en ce que**
l'actionneur est constitué pour provoquer une manoeuvre d'ouverture de l'ouverture d'écoulement sous l'effet d'une sollicitation par l'air comprimé, et des ressorts (17) sont prévus pour fermer l'ouverture d'écoulement (12).

3. Dispositif selon une des revendications 1 ou 2,
**caractérisé en ce que**
le flotteur (1) peut être rempli d'eau pour régler le niveau de l'écoulement par une modification de la profondeur d'immersion.

4. Installation de clarification comprenant un réacteur SBR,
**caractérisée en ce qu'**
il est prévu un dispositif selon les revendications 1 ou 3.

5. Installation de clarification selon la revendication 4,
**caractérisée en ce qu'**
à l'extérieur du réacteur SBR, est disposée une pompe pour l'écoulement d'eau claire qui est reliée au tuyau d'écoulement (5).

6. Installation de clarification selon une des revendications 4 ou 5,
**caractérisée en ce que**
le dispositif (26) pour l'écoulement d'eau claire est guidé dans la direction verticale sur des barres de guidage (25) qui sont supportées par des barres de support (23), les barres de guidage (25) et les barres de support (23) étant reliées par une partie de liaison (24) située au-dessous du dispositif (26).

7. Installation de clarification selon la revendication 6, comprenant un couvercle (22),
**caractérisée en ce que**
les barres de support (23) sont fixées au couvercle (22) et les barres de guidage (25) sont supportées transversalement à leur axe par un autre couvercle (27) de l'installation de clarification qui est disposé à l'intérieur du premier couvercle (22).
